# EUROPÄISCHE PATENTSCHRIFT

(11) **EP 0 672 316 B1**
(45) Veröffentlichungstag und Bekanntmachung des Hinweises auf die Patenterteilung: **28.08.1996**
(21) Anmeldenummer: 93924606.2
(22) Anmeldetag: 09.11.1993
(51) Int. Cl.: H02M 3/10, G05F 1/59, H02J 7/00, H02H 7/18, H02P 7/28

(54) **AUTOMATISCHE LASTSTROMRÜCKREGELUNG**
AUTOMATIC LOAD CURRENT BACK REGULATION
REGULATION AUTOMATIQUE DE RETOUR DU COURANT SOUS CHARGE

(30) Priorität: 05.12.1992 DE 4241066
(43) Veröffentlichungstag der Anmeldung: 20.09.1995
(73) Patentinhaber: Braun Aktiengesellschaft, 60326 Frankfurt am Main (DE)
(72) Erfinder: LANG, Gerhard, D-61276 Altweilnau (DE)
(86) Internationale Anmeldenummer: EP9303137
(87) Internationale Veröffentlichungsnummer: WO9414229

(56) Entgegenhaltungen:
- EP-A- 0 249 259
- DE-A- 3 610 035
- DE-A- 3 611 484
- DE-A- 4 131 981

## Beschreibung

Die Erfindung betrifft eine Schaltungsanordnung zur automatischen Laststromrückregelung mit einer an einer Gleichspannungsquelle liegenden Serienschaltung einer Last und eines ersten elektronischen Schalters, der von einem Treiber angesteuert wird, und mit einer den Treiber ansteuernden Regelschaltung.

In der EP-A-60 54 38 (veröffentlichtungstag 13/7/94), die der älteren deutschen Patentanmeldung P 41 31 981.8 entspricht, ist ein batteriebetriebenes Gerät mit einem von der Batterie über einen elektronischen Schalter gespeisten elektrischen Verbraucher und mit einem Display zur Anzeige des Ladezustands der Batterie beschrieben. Bei einem Gleichstrommotor als Verbraucher, wie beispielsweise bei einem aufladbaren Rasierapparat, wird bei Erreichen der Ladezustandsanzeige "Null", oder bei Absinken der Batteriespannung unter einen bestimmten Wert, die Motordrehzahl mittels eines Pulsbreitenmodulators bis auf "Null" reduziert. Hier wird also der Laststrom von außen durch einen Pulsbreitenmodulator herabgeregelt. Eine solche Laststromrückregelung kann beispielsweise dazu dienen, um die Batterie (den Akkumulator) vor Tiefentladungen zu schützen.

Aufgabe der vorliegenden Erfindung ist es, eine einfache und kostengünstige Schaltungsanordnung zur automatischen Laststromrückregelung zu schaffen.

Diese Aufgabe wird dadurch gelöst, daß bei einer Schaltungsanordnung der eingangs genannten Art die Regelschaltung mittels eines zweiten elektronischen Schalters initiierbar ist, so daß dieser zweite elektronische Schalter sowohl den ersten Anschluß eines Kondensators und eines ersten Widerstands als auch die Basis eines Transistors mit dem einen Pol der Gleichspannungsquelle verbindet, wobei die Hauptstromstrecke des Transistors zwischen dem Eingang des Treibers und dem anderen Pol der Gleichspannungsquelle liegt, daß der zweite Anschluß des Kondensators und des ersten Widerstands mit dem anderen Pol der Gleichspannungsquelle in Verbindung steht und daß das mit der Last verbundene Ende des ersten elektronischen Schalters über einen Rückkopplungswiderstand mit dem zweiten Anschluß des Kondensators verbunden ist.

Vorteilhafte Ausgestaltungen sind den Unteransprüchen und der Beschreibung entnehmbar.

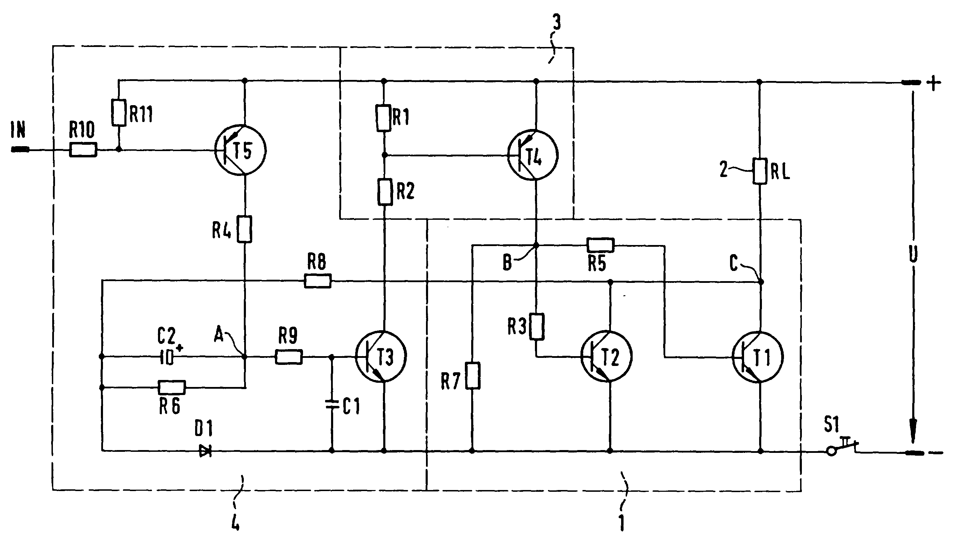

Die Erfindung wird im folgenden an Hand eines in der Zeichnung dargestellten Ausführungsbeispiels näher beschrieben.

Die Last 2 kann ein beliebiger elektrischer Verbraucher, beispielsweise ein Gleichstrommotor, sein und ist hier durch den Lastwiderstand RL symbolisiert. In Serie zur Last 2 liegt die Parallelschaltung der beiden Transistoren T1 und T2, die den ersten elektronischen Schalter 1 bilden, wobei die Kollektoren der beiden Transistoren mit der Last 2 (Punkt C) und die Emitter mit Bezugspotential verbunden sind. An diese Serienschaltung kann über einen Schalter S1 eine Gleichspannung U angelegt werden, wobei der Pluspol der Spannungsquelle an der Last und der Minuspol, der hier das Bezugspotential darstellt, an den Emittern der Transistoren T1 und T2 liegt. Die Gleichspannungsquelle U kann beispielsweise die Batterie oder der Akkumulator eines kleinen elektrischen Geräts, wie eines Rasierers, zum Antrieb eines die Last 2 bildenden Gleichstrommotors sein. Die Basen der Transistoren T1 und T2 sind über Basiswiderstände R5 und R3 mit dem Kollektor eines den Treiber bildenden Transistors T4 verbunden (Punkt B). Der Kollektor des Transistors T4 (Punkt B) ist außerdem über einen Widerstand R7 mit Bezugspotential verbunden und der Emitter ist an den Pluspol der Spannungsquelle U geführt. Die Basis des Transistors T4 liegt an einem Spannungsteiler, der aus den Widerständen R1 und R2 besteht, wobei der Widerstand R1 mit dem Pluspol der Spannungsquelle U und der Widerstand R2 mit dem Kollektor eines Transistors T3, der Bestandteil der Regelschaltung 4 ist, verbunden ist. Der Emitter des Transistors T3 liegt an Bezugspotential.

Die Basis des Transistors T3 ist über einen Basiswiderstand R9 an den Verbindungspunkt A und über einen Kondensator C1 nach Bezugspotential geführt. An diesem Verbindungspunkt A liegt sowohl der erste Anschluß eines Kondensators C2 und eines Widerstands R6 als auch über einen Widerstand R4 der Kollektor eines den zweiten elektronischen Schalter bildenden Transistors T5, dessen Emitter an den Pluspol der Spannungsquelle U geführt ist. Der zweite Anschluß des Kondensators C2 und des parallel geschalteten Widerstands R6 liegen über eine Diode D1 an Bezugspotential. Der zweite Anschluß des Widerstands R6 kann, anstatt über die Diode D1, auch direkt mit Bezugspotial verbunden werden, oder es kann ein weiterer Widerstand vom Punkt A direkt mit Bezugspotential verbunden werden (nicht dargestellt). Der zweite Anschluß des Kondensators C2 ist außerdem über einen Rückkopplungswiderstand R8 mit den Kollektoren der Transistoren T1 und T2 (Punkt C) verbunden.

Der Anschluß IN stellt den Eingang der Schaltungsanordnung dar und führt über einen Widerstand R10 an die Basis des Transistors T5. Die Basis des den zweiten elektronischen Schalter bildenden Transistors T5 ist über einen Widerstand Rll mit dem Pluspol der Spannungsquelle verbunden, so daß bei Nichtanliegen eines Eingangssignals der Transistor T5 automatisch sperrt.

Es soll nun die Funktionsweise dieses Ausführungsbeispiels einer automatischen Laststromrückregelung näher erläutert werden.

Im Normalbetrieb liegt der Eingang IN auf LOW (Bezugspotential) und die Last 2, beispielsweise der Gleichstrommotor eines Rasierapparates, kann über den Schalter S1 beliebig ein- und ausgeschaltet werden. Bei der folgenden Betrachtung wird als Spannungsquelle ein aufgeladener zweizelliger Akkumulator mit der Akkumulatorspannung U = 2,3 Volt angenommen. Bei geschlossenem Schalter S1 ist dann der Transistor T5 durchgeschaltet und der erste Anschluß des Kondensators C2 (Punkt A) ist auf 2,3 V - 0,6 V = 1,7 V aufgeladen, wobei 0,6 V die Flußspannung der Diode D1 ist. Da dieses Potential auch an der Basis des Transistors T3 liegt, ist dieser ebenfalls durchgeschaltet und in Folge davon der Transistor T4. Über die durchgeschaltete Emitter-Kollektor-Strecke liegt der Punkt B auf Pluspotential und die Transistoren T1 und T2 des elektronischen Schalters 1 sind ebenfalls voll durchgeschaltet, so daß durch die Last 2 der maximale Laststrom fließt. Der rechte Anschluß des Rückkopplungswiderstands R8 liegt über die Kollektor-Emitter-Strecken der Transistoren T1 und T2 auf Bezugspotential.

Springt nun das Eingangssignal IN auf HIGH Pegel (Pluspotential), was beispielsweise durch einen Microcontroller erfolgen kann, wobei das auslösende Kriterium beispielsweise das Absinken der Batteriespannung U unter einen bestimmten Wert und/oder die Anzeige einer bestimmten Mindestladung oder der Ladezustand "Null" eines Displays, das den Ladezustand des Akkumulators anzeigt, sein kann. Der Transistor T5 wird nun gesperrt. Auch wenn kein Eingangssignal IN anliegt, wird der Transistor T5 über den Widerstand R11 gesperrt. Der Kondensator C2 beginnt sich nun sowohl über den Widerstand R6 als auch über den Widerstand R9, die Basis-Emitter-Strecke von T3, die Kollektor-Emitter-Strecke von T1/T2 und über den Widerstand R8 zu entladen. Alle Transistoren bis auf T5 sind noch durchgeschaltet.

Ist das Potential am Punkt A auf etwa 0,6 Volt abgesunken, beginnt der Transistor T3 zu sperren. Damit beginnt das Potential an der Basis des Transitors T4 zu steigen. Ab wann nun der Transistor T4 zu sperren beginnt, hängt von dem Widerstandsverhältnis R1:R2 der Widerstände R1, R2 ab. Je kleiner dieses Widerstandsverhältnis ist, das heißt je kleiner beispielsweise der Widerstand R1 gemacht wird, desto schneller beginnt der Transistor T4 zu sperren. Durch die Dimensionierung dieses Widerstandsverhältnisses kann also die Auslösezeit bestimmt werden, das heißt die Zeit ab Anlegen eines HIGH Signals am Eingang IN bis zum Beginn der Ladestromreduzierung. Sobald nämlich der Treibertransistor T4 zu sperren beginnt, wird auch die Sperrphase der Transistoren T1 und T2 des elektronischen Schalters 1 eingeleitet und der Laststrom durch die Last 2 beginnt sich zu verringern, das heißt die Drehzahl eines Gleichstrommotors als Last beginnt sich zu reduzieren.

Die Kollektor-Emitter-Spannung der Transistoren T1 und T2 steigt nun an, das heißt das Potential am Punkt C wird erhöht, so daß über den Widerstand R8 der Kondensator C2 nun umgekehrt aufgeladen wird. Das hat zur Folge, daß der Transistor T3 wieder leicht angesteuert wird und somit die Transistoren T4 und T1/T2 nur langsam sperren, so daß der Laststrom stetig abnimmt. Der Ladestrom des Kondensators C2 nimmt ebenfalls ab und das Potential am Punkt C, das heißt die Kollektor-Emitter-Spannung von T1/T2, steigt weiter an. Es liegt nun eine Spannungsgegenkopplung vor.

Der Ladestrom des Kondensators C2 wird Null, wenn der Punkt C das Potential 0,6 Volt erreicht hat, daß ist die Flußspannung der Diode D1, die den linken Anschluß des Kondensators C2 auf 0,6 Volt klemmt. Der Laststrom wird zu Null, das heißt ein Motor als Last bleibt stehen.

Die Zeit, in welcher der Laststrom herabgeregelt wird, das ist die Zeit ab Beginn des Sperrens von Transistor T4 bis zum Zeitpunkt Laststrom gleich Null, wird im wesentlichen durch die Zeitkonstante des aus dem Kondensator C2 und dem Widerstand R8 bestehenden Zeitglieds bestimmt. Einen geringen Einfluß haben auch noch die Widerstände R6 und R9. In einer praktischen Ausführungsform kann die Zeit ab Initiierung der Anordnung bis zum Beginn der Laststromreduzierung beispielsweise 30 Sekunden betragen und nochmals 30 Sekunden bis der Laststrom Null wird.

Der zwischen Basis und Emitter des Transistors T3 geschaltete Kondensator C1 unterdrückt eine eventuelle Schwingneigung des Regelkreises. Der zum Kondensator C2 parallel geschaltete Widerstand R6 sorgt für eine völlige Entladung des Kondensators C2, so daß auch ein Öffnen des Schalters S1 während des Rückregelvorgangs diesen nicht unterbricht, das heißt daß die Laststromrückregelung auch bei geöffnetem Schalter S1 zu Ende läuft. Hierdurch wird sichergestellt, daß bei Abschaltung des Motors mittels des Schalters S1 während des Rückregelvorgangs der Motor beim Wiedereinschalten (bei noch am Eingang IN anliegendem HIGH Signal) nicht mehr anläuft. Für die Aufhebung des Stillstands des Motors ist im jedem Fall wieder das Anlegen eines LOW Signals am Eingang IN erforderlich.

## Patentansprüche

1. Schaltungsanordnung zur automatischen Laststromrückregelung mit einer an einer Gleichspannungsquelle (U) liegenden Serienschaltung einer Last (2) und eines ersten elektronischen Schalters (1), der von einem Treiber (3) angesteuert wird, und mit einer den Treiber (3) ansteuernden Regelschaltung (4),
**dadurch gekennzeichnet**,
daß die Regelschaltung (4) mittels eines zweiten elektronischen Schalters (T5) initiierbar (IN) ist, so daß dieser zweite elektronische Schalter (T5) sowohl den ersten Anschluß (A) eines Kondensators (C2) und eines ersten Widerstands (R6) als auch die Basis eines Transistors (T3) mit dem einen Pol (+) der Gleichspannungsquelle (U) verbindet, wobei die Hauptstromstrecke des Transistors (T3) zwischen dem Eingang des Treibers (3) und dem anderen Pol (Bezugspotential) der Gleichspannungsquelle (U) liegt, daß der zweite Anschluß des Kondensators (C2) und des ersten Widerstands (R6) mit dem anderen Pol (Bezugspotential) der Gleichspannungsquelle (U) in Verbindung steht und daß das mit der Last (2) verbundene Ende (C) des ersten elektronischen Schalters (1) über einen Rückkopplungswiderstand (R8) mit dem zweiten Anschluß des Kondensators (C2) verbunden ist.

2. Schaltungsanordnung nach Anspruch 1,
**dadurch gekennzeichnet**,
daß der Kondensator (C2) über eine Diode (D1) mit dem anderen Pol (Bezugspotential) der Gleichspannungsquelle (U) verbunden ist.

3. Schaltungsanordnung nach Anspruch 1 oder 2,
**dadurch gekennzeichnet**,
daß der erste Widerstand (R6) zum Kondensator (C2) parallel geschaltet ist.

4. Schaltungsanordnung nach Anspruch 1,
**dadurch gekennzeichnet**,
daß die Basis des Transistors (T3) über einen zweiten Widerstand (R9) mit dem ersten elektronischen Schalter (T5) und dem ersten Anschluß (A) des Kondensators (C2) in Verbindung steht.

5. Schaltungsanordnung nach Anspruch 1 ,
**dadurch gekennzeichnet**,
daß zwischen die Basis des Transistors (T3) und den anderen Pol (Bezugspotential) der Gleichspanungsquelle (U) ein weiterer Kondensator (C1) geschaltet ist.

6. Schaltungsanordnung nach Anspruch 1 ,
**dadurch gekennzeichnet**,
daß der Eingang des Treibers (3) an einen Spannungsteiler (R1/R2) geführt ist, der zwischen dem einen Pol (+) der Gleichspannungsquelle (U) und der Hauptstromstrecke des Transistors (T3) angeordnet ist.

7. Schaltungsanordnung nach Anspruch 1 ,
**dadurch gekennzeichnet**,
daß der zweite elektronische Schalter (T5) bei Nichtanliegen eines Eingangssignals (IN) gesperrt ist.

8. Schaltungsanordnung nach Anspruch 1,
**dadurch gekennzeichnet**,
daß die Gleichspannungsquelle (U) ein Akkumulator oder eine Batterie ist.

9. Schaltungsanordnung nach Anspruch 1,
**dadurch gekennzeichnet**,
daß die Last (2) ein Gleichstrommotor ist.

10. Schaltungsanordnung nach Anspruch 1 ,
**dadurch gekennzeichnet**,
daß die Serienschaltung aus der Last (2) und dem ersten elektronischen Schalter (1) über einen Schalter (S1) mit der Gleichspannungsquelle (U) verbindbar ist.

11. Schaltungsanordnung nach Anspruch 1 ,
**dadurch gekennzeichnet**,
daß der erste elektronische Schalter (1) aus zwei parallel geschalteten Transistoren (T1, T2) besteht, deren Basen über jeweils einen Widerstand (R3, R5) mit der Hauptstromstrecke des aus einem weiteren Transistor (T4) bestehenden Treibers (3) verbunden sind.

12. Schaltungsanordnung nach Anspruch 1 ,
**dadurch gekennzeichnet**,
daß der mit dem Eingang (B) des ersten elektronischen Schalters (1) verbundene Ausgang des Treibers (3) über einen dritten Widerstand (R7) mit dem anderen Pol (Bezugspotential) der Gleichspannungsquelle (U) verbunden ist.

13. Schaltungsanordnung nach Anspruch 1 ,
**dadurch gekennzeichnet**,
daß der zweite elektronische Schalter (T5) initiiert wird, wenn die Gleichspannungsquelle (U) unter einen bestimmten Spannungswert gesunken ist.

14. Schaltungsanordnung nach Anspruch 8 ,
**dadurch gekennzeichnet**,
daß der Ladezustand des Akkumulators von einem Display angezeigt wird und daß bei Anzeige einer bestimmten Mindestladung oder der Ladung "Null" der zweite elektronische Schalter (T5) initiiert wird.

15. Schaltungsanordnung nach Anspruch 6 ,
**dadurch gekennzeichnet**,
daß durch das Teilerverhältnis des Spannungsteilers (R1/R2) die Zeitspanne einstellbar ist, die ab Initiierung des zweiten elektronischen Schalters (T5) bis zum Beginn der Laststromrückregelung vergeht.

16. Schaltungsanordnung nach Anspruch 1 oder 4,
**dadurch gekennzeichnet**,
daß die Zeitkonstante des aus dem Kondensator (C2) und dem Rückkopplungswiderstand (R8) bestehenden Zeitgliedes im wesentlichen die Zeitspanne bestimmt, die ab Beginn der Laststromrückregelung bis zum Erreichen von Laststrom gleich Null vergeht.

## Claims

1. A circuit arrangement for automatically decreasing the load current, comprising a series arrangement formed by a load (2) and a first electronic switching device (1) and connected to a DC source of power (U), said first switching device being driven by a driver (3), and further comprising a control circuit (4) controlling said driver (3),
**characterized in that** the control circuit (4) is adapted to be initiated (IN) by means of a second electronic switching device (T5), so that said second electronic switching device (T5) connects the first terminal (A) of a capacitor (C2) and of a first resistor (R6) as well as the base of a transistor (T3) to the one pole (+) of the DC source of power (U), with the main current path of the transistor (T3) being between the input of the driver (3) and the other pole (reference potential) of the DC source (U), that the second terminal of the capacitor (C2) and of the first resistor (R6) is coupled to the other pole (reference potential) of the DC source (U), and that the end (C) of the first electronic switching device (1) connected to the load (2) is coupled to the second terminal of the capacitor (C2) through a feedback resistor (R8).

2. The circuit arrangement as claimed in claim 1,
**characterized in that** the capacitor (C2) is connected to the other pole (reference potential) of the DC source of power (U) through a diode (D1).

3. The circuit arrangement as claimed in claim 1 or claim 2,
**characterized in that** the first resistor (R6) is connected in parallel with the capacitor (C2).

4. The circuit arrangement as claimed in claim 1,
**characterized in that** the base of the transistor (T3) is connected, through a second resistor (R9), to the first electronic switching device (T5) and to the first terminal (A) of the capacitor (C2).

5. The circuit arrangement as claimed in claim 1,
**characterized in that** a further capacitor (C1) is inserted between the base of the transistor (T3) and the other pole (reference potential) of the DC source of power (U).

6. The circuit arrangement as claimed in claim 1,
**characterized in that** the input of the driver (3) is connected to a voltage divider (R1/R2) arranged between the one pole (+) of the DC source of power (U) and the main current path of the transistor (T3).

7. The circuit arrangement as claimed in claim 1,
**characterized in that** the second electronic switching device (T5) is non-conducting in the absence of an input signal (IN).

8. The circuit arrangement as claimed in claim 1,
**characterized in that** the DC source of power (U) is an accumulator or a battery.

9. The circuit arrangement as claimed in claim 1,
**characterized in that** the load (2) is a direct-current motor.

10. The circuit arrangement as claimed in claim 1,
**characterized in that** the series arrangement formed by the load (2) and the first electronic switching device (1) is adapted to be connected to the DC source of power (U) by means of a switch (S1).

11. The circuit arrangement as claimed in claim 1,
**characterized in that** the first electronic switching device (1) is comprised of two parallel-connected transistors (T1, T2) having their bases connected, through a respective resistor (R5, R3), to the main current path of the driver (3) comprised of a further transistor (T4).

12. The circuit arrangement as claimed in claim 1,
**characterized in that** the output of the driver (3) connected to the input (B) of the first electronic switching device (1) is connected to the other pole (reference potential) of the DC source of power (U) through a third resistor (R7).

13. The circuit arrangement as claimed in claim 1,
**characterized in that** the second electronic switching device (T5) is initiated when the voltage of the DC source of power (U) has dropped below a specified value.

14. The circuit arrangement as claimed in claim 8,
**characterized in that** the charge status of the accumulator is indicated by a display means, and that the second electronic switching device (T5) is initiated when a specified minimum charge or the charge status "zero" is annunciated.

15. The circuit arrangement as claimed in claim 6,
**characterized in that** the resistance ratio of the voltage divider (R1/R2) enables the period of time to be adjusted that elapses from the initiation of the second electronic switching device (T5) until the beginning of the load current decreasing action.

16. The circuit arrangement as claimed in claim 1 or claim 4,
**characterized in that** the time constant of the time element comprised of the capacitor (C2) and the feedback resistor (R8) essentially determines the time elapsing from the beginning of the load current decreasing action until the load current reaches a value equaling zero.

## Revendications

1. Agencement de circuit pour la régulation en retour de courant de charge automatique, comprenant un circuit en série composé d'une charge (2) et d'un premier interrupteur (1) électronique se trouvant à une source de tension continue (U), qui sera commandé par un excitateur (3), et un circuit de régulation (4) commandant l'excitateur (3),
caractérisé en ce,
que le circuit de régulation (4) est susceptible d'être initié (IN) au moyen d'un deuxième interrupteur (T5) électronique, de sorte que ce deuxième interrupteur (T5) électronique, relie aussi bien le premier raccordement (A) d'un condensateur (C2) et d'une première résistance électrique (R6), qu'aussi la base d'un transistor (T3), avec l'un des pôles (+) de la source de tension continue (U), le parcours du courant principal du transistor (T3) se trouvant entre l'entrée de l'excitateur (3) et l'autre pôle (potentiel de référence) de la source de tension continue (U), que le deuxième raccordement du condensateur (C2) et de la première résistance électrique (R6) se trouve en liaison avec l'autre pôle (potentiel de référence) de la source de tension continue (U) et en ce que l'extrémité (C) du premier interrupteur (1) électronique reliée avec la charge (2), par l'intermédiaire d'une résistance électrique de rétroaction (R8), est reliée avec le deuxième raccordement du condensateur (C2).

2. Agencement de circuit selon la revendication 1,
caractérisé en ce,
que le condensateur (C2) est relié, par l'intermédiaire d'une diode (D1), avec l'autre pôle (potentiel de référence) de la source de tension continue (U).

3. Agencement de circuit selon la revendication 1 ou la revendication 2,
caractérisé en ce,
que la première résistance électrique (R6) est mise en circuit parallèle au condensateur (C2).

4. Agencement de circuit selon la revendication 1,
caractérisé en ce,
que la base du transistor (T3), par l'intermédiaire d'une deuxième résistance électrique (R9), se trouve en liaison avec le premier interrupteur (T5) électronique et le premier raccordement (A) du condensateur (C2).

5. Agencement de circuit selon la revendication 1,
caractérisé en ce,
qu'entre la base du transistor (T3) et l'autre pôle (potentiel de référence) de la source de tension continue (U), un autre condensateur (C1) est mis en circuit.

6. Agencement de circuit selon la revendication 1,
caractérisé en ce,
que l'entrée de l'excitateur (3) est conduite à un diviseur de tension (R1/R2), qui est agencé entre l'un des pôles (+) de la source de tension continue (U) et le parcours de courant principal du transistor (T3).

7. Agencement de circuit selon la revendication 1,
caractérisé en ce,
que le deuxième interrupteur (T5) électronique est bloqué lors de non-application d'un signal d'entrée (IN).

8. Agencement de circuit selon la revendication 1,
caractérisé en ce,
que la source de tension continue (U) est un accumulateur ou une batterie.

9. Agencement de circuit selon la revendication 1,
caractérisé en ce,
que la charge (2) est un moteur à courant continu.

10. Agencement de circuit selon la revendication 1,
caractérisé en ce,
que le circuit en série composé de la charge (2) et du premier interrupteur (1) électronique, par l'intermédiaire d'un interrupteur (S1), est susceptible d'être relié avec la source de courant continue (U).

11. Agencement de circuit selon la revendication 1,
caractérisé en ce,
que le premier interrupteur (1) électronique consiste en deux transistors (T1, T2) mis en circuit en parallèle, dont les bases, par l'intermédiaire chaque fois d'une résistance électrique (R3, R5), sont reliées avec le parcours de courant principal de l'excitateur (3) consistant en un autre transistor (T4).

12. Agencement de circuit selon la revendication 1,
caractérisé en ce,
que la sortie de l'excitateur (3), reliée avec l'entrée (B) du premier interrupteur (1) électronique, par l'intermédiaire d'une troisième résistance électrique (R7), est reliée avec l'autre pôle (potentiel de référence) de la source de tension continue (U).

13. Agencement de circuit selon la revendication 1,
caractérisé en ce,
que le deuxième interrupteur (T5) électronique sera initié lorsque la source de tension continue (U) est descendue au-dessous d'une valeur de tension déterminée.

14. Agencement de circuit selon la revendication 8,
caractérisé en ce,
que l'état de charge de l'accumulateur sera indiqué par un dispositif d'affichage, et que, lors d'indication d'une charge minimale déterminée ou de la charge "zéro", le deuxième interrupteur (T5) électronique sera initié.

15. Agencement de circuit selon la revendication 6,
caractérisé en ce,
que grâce au rapport de division du diviseur de tension (R1/R2), le laps de temps est susceptible d'être ajusté, qui s'écoule à partir de l'initiation du deuxième interrupteur (T5) électronique jusqu'au début de la régulation en retour de courant de charge.

16. Agencement de circuit selon la revendication 1 ou la revendication 4,
caractérisé en ce,
que la constante de temps de l'élément de temporisation, constitué du condensateur (C2) et de la résistance électrique de rétroaction (R8), détermine pour l'essentiel le laps de temps, qui s'écoule à partir du début de la régulation en retour de courant de charge jusqu'à l'obtention du courant de charge.
